# EUROPÄISCHE PATENTANMELDUNG

(11) **EP 1 125 795 A2**
(43) Veröffentlichungstag der Anmeldung: **22.08.2001**
(21) Anmeldenummer: 00120279.5
(22) Anmeldetag: 28.09.2000
(51) Int. Cl.: B60R 1/074

(54) **Stellantrieb für einen Kfz-Aussenrückblickspiegel**

(30) Priorität: 16.02.2000 DE 10006914
(71) Anmelder: Bühler Motor GmbH, 90459 Nürnberg (DE)
(72) Erfinder: Stolpe, Thomas, 90542 Eckental (DE)

(57) **Zusammenfassung**

Die Erfindung betrifft einen Stellantrieb für einen Kfz-Außenrückblickspiegel, mit einem am Kraftfahrzeug zu befestigenden Spiegelfuß, einem ein Spiegelglas tragenden, um eine Schwenkachse schwenkbaren Spiegelkopf, der durch den in einem mehrteiligen Antriebsgehäuse angeordneten Stellantrieb antreibbar ist, bestehend aus einem axial in Bezug auf das Antriebsgehäuse geringfügig in Achsrichtung verschiebbaren sowie Versorgungsanschlüsse aufweisenden Elektromotor, dessen Ausgangswelle getrieblich mit einem selbsthemmenden Untersetzungsgetriebe in Eingriff ist und einem mit dem Spiegelfuß in Berührung stehenden Mikroschalter. Es ist Aufgabe der vorliegenden Erfindung den Außenrückblickspiegel so zu gestalten, dass er prozesssicher montierbar ist und und aus einer geringen Anzahl von Teilen besteht. Diese Aufgabe wird erfindungsgemäß dadurch gelöst, dass mit einem ersten Gehäuseteil ein Steckerschacht einstückig ist und dass Enden von Leitblechen, die mit den Versorgungsanschlüssen des Elektromotors verbunden sind und Enden von Leitblechen, die mit Anschlüssen des Mikroschalters elektrisch verbunden sind in einem zwischen dem inneren Öffnungsquerschnitt des äußeren Steckerschachtendes und der Projektion des Öffnungsquerschnittes auf die gegenüberliegende Antriebsgehäusewand beschriebenen Raumbereich angeordnet und durch einen einzigen Stecker kontaktierbar sind.

## Beschreibung

Die Erfindung betrifft einen Stellantrieb für einen Kfz-Außenrückblickspiegel, mit einem am Kraftfahrzeug zu befestigenden Spiegelfuß, einem ein Spiegelglas tragenden, um eine Schwenkachse schwenkbaren Spiegelkopf, der durch den in einem mehrteiligen Antriebsgehäuse angeordneten Stellantrieb antreibbar ist, bestehend aus einem axial in Bezug auf das Antriebsgehäuse geringfügig in Achsrichtung verschiebbaren sowie Versorgungsanschlüsse aufweisenden Elektromotor, dessen Ausgangswelle getrieblich mit einem selbsthemmenden Untersetzungsgetriebe in Eingriff ist, dessen Ausgangszahnrad über ausrastbare Rastmittel unter der Kraftwirkung einer Druckfeder mit dem Spiegelfuß in Eingriff gehalten ist, wobei der Spiegelkopf unter Einwirkung einer äußeren Kraft aus einer Gebrauchslage (F bis P) um die Schwenkachse an das Kraftfahrzeug anklappbar ist, wobei der Spiegelkopf durch die ausrastbaren Rastmittel mitnehmbar ist und dabei gegenüber dem Spiegelfuß entlang der Schwenkachse eine Relatiwerschiebung ausführen kann, die durch einen im Antriebsgehäuse angeordneten und mit dem Spiegelfuß in Berührung stehenden Mikroschalter erkennbar ist.

Bei einem bekannten Außenrückblickspiegel der oben genannten Gattung sind der Mikroschalter und die Motoranschlüsse mit Litzenleitern verlötet bzw. vercrimpt, welche durch das Antriebsgehäuse nach Außen geführt werden. Diese Litzenleiter sind Teil eines Kabelbaums der weitere elekrische Verbraucher im Außenspiegel mit der Fahrzeugelektrik verbindet. Der Mikroschalter ist aus technischen Gründen an einer relativ unzugänglichen Stelle innerhalb des Antriebsgehäuses angeordnet und seine Anschlüsse sind entfernt von den Anschlüssen des Elektromotors. Daher ist der Montageaufwand für die Einführung der bereits vorher mit dem Kabelbaum verlöteten bzw. vercrimpten Bauteile in das Antriebsgehäuse relativ groß.

Daher ist es Aufgabe der vorliegenden Erfindung einen Außenrückblickspiegel der genannten Gattung so zu gestalten, dass er prozesssicher montierbar ist, aus einer geringen Anzahl von Teilen besteht, ohne dass die Möglichkeit einer relativ beliebigen Herausführung der Motoranschlüsse aus dem Antriebsgehäuse und ein sicheres Anfahren aus einer blockierten Stellung nicht wesentlich eingeschränkt werden.

Diese Aufgabe wird erfindungsgemäß dadurch gelöst, dass mit einem ersten Gehäuseteil ein Steckerschacht einstückig ist und dass Enden von Leitblechen, die mit den Versorgungsanschlüssen des Elektromotors verbunden sind und Enden von Leitblechen, die mit Anschlüssen des Mikroschalters elektrisch verbunden sind in einem zwischen dem inneren Öffnungsquerschnitt des äußeren Steckerschachtendes und der Projektion des Öffnungsquerschnittes auf die gegenüberliegende Antriebsgehäusewand beschriebenen Raumbereich angeordnet und durch einen einzigen Stecker kontaktierbar sind. Durch die Verwendung von Leitblechen ist eine automatisierte Fertigung der Anschlüsse möglich. Da sowohl die Enden der Versorgungsanschlüsse des Elektromotors, als auch die Enden der Anschlüsse des Mikroschalters in einem definierten Bereich zwischen dem Steckerschachtende und dessen Projektion auf die gegenüberliegende Antriebsgehäusewand geführt werden, können dort beide durch einen einzigen Stecker kontaktiert werden, dies reduziert die Teilezahl und den Montageaufwand. Durch diese Maßnahmen ist der Elektromotor kaum in seiner Axialbeweglichkeit gehindert.

Dass unterschiedliche Anschlussstellen und Steckrichtungen trotz dieser Vereinfachung möglich sind, zeigen die Ausführungsbeispiele, die in den Unteransprüchen beschrieben werden.

Es sind auch unterschiedliche Steckerausführungen verwendbar, beispielsweise können die Enden, etwa bei einem 4-poligen Stecker, sowohl als männliche, als auch als weibliche Steckanschlüsse ausgeführt sein.

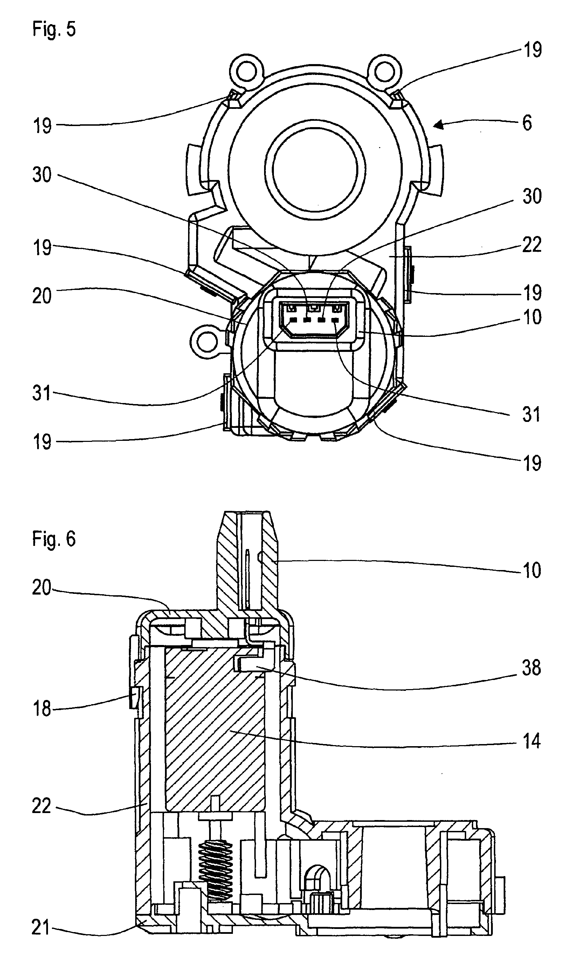

Vorzugsweise ragen die Enden der Leitbleche in den Steckerschacht und werden dort form- oder kraftschlüssig gehalten. Bei der Ausführung nach Fig. 5 bis 7 wird die Steckkraft durch Abstützung der beiden Leitbleche auf dem Motorgehäuse von diesem aufgenommen. Dadurch weichen die Leitbleche beim Einstecken des Steckers nicht zurück. Ein Zurückweichen könnte nämlich zu Montageschwierigkeiten führen oder die Kontaktsicherheit beeinträchtigen.

Um die Axialbeweglichkeit des Elektromotors nicht zu beeinträchtigen sind die Leitbleche, die mit dem Elektromotor elektrisch verbunden sind, L- bis U-förmig ausgebildet. Dabei sind die L- bis U-förmig ausgebildeten Leitbleche auf der dem Steckerschacht abgewandten Seite des Elektromotors, mit den Versorgungsanschlüssen elektrisch kontaktiert und auf der dem Steckerschacht zugewandten Seite des Elektromotors, mit dem Stecker elektrisch kontaktierbar. Dadurch ergibt sich ein langer Federweg, der für einen geringen Axialbewegungsspielraum des Elektromotors ausreicht. Der Stecker braucht sich dabei nicht mitzubewegen.

Bei der Ausführung nach Fig. 5 bis 7 ist der Querschnitt der Leitbleche geringer als der Öffnungsquerschnitt im Steckerschacht. Weiterhin weist der Stecker im Einbauzustand einen axialen Bewegungsspielraum auf, wodurch der Motor ein gewisses axiales Spiel behält. Daher kann sich die Baugruppe aus Elektromotor, Leitblechen und Stecker geringfügig axial bewegen.

Zweckmäßigerweise sind die Leitbleche zwischen dem Mikroschalter und dem Steckerschacht im Antriebsgehäuse form- und/oder kraftschlüssig gehalten. Auf diese Weise ist eine prozesssichere Montage gewährleistet. Die Befestigung kann dabei beispielsweise durch Nieten, Heißverpressen, Verstemmen oder dgl. erfolgen.

Eine radiale Beweglichkeit des Elektromotors ist unerwünscht, weil dadurch Geräusche entstehen könnten, er muss aber soviel Spielraum haben, dass er axialbeweglich bleibt. Dadurch wird das Anlaufverhalten verbessert. Für die Axialbeweglichkeit ist der Elektromotor einerseits über die Welle und andererseits über einen Motoransatz im Antriebsgehäuse axial verschieblich gelagert.

Bei den Ausführungsformen, bei denen das Gehäuseteil in axialer Richtung aufgeschnappt wird, während die Steckrichtung rechtwinklig dazu verläuft, kann es schwierig bis unmöglich sein, dieses Gehäuseteil zu montieren .Daher ist vorgesehen, dass das Antriebsgehäuse aus vier Gehäuseteilen zusammengesetzt ist, wobei das erste Gehäuseteil mit dem Steckerschacht einstückig ist, das zweite Gehäuseteil am dritten Gehäuseteil über Schnappmittel gehalten ist und ein viertes Gehäuseteil über eine Schiebeverbindung mit dem ersten Gehäuseteil verbunden und am dritten Gehäuseteil über Schnappmittel gehalten ist. Dabei wird zunächst das erste Gehäuseteil mit dem Steckerschacht auf die Enden der Leitbleche, die mit dem Motor vormontiert sind, in Steckrichtung aufgezogen und anschließend das vierte Gehäuseteil über die Schiebeverbindung rechtwinklig zu der Steckrichtung aufgeschoben.

Für die Verbindungen zwischen den Leitblechen und dem Elektromotor bzw. dem Mikroschalter bieten sich Klemmverbindungen an, weil diese einfach zu montieren sind und eine sichere elektrische Verbindung gewährleisten.

Neben der bereits genannten rechtwinkligen Steckrichtung ist auch ohne weiteres eine Steckrichtung und damit eine Steckerschachtausrichtung möglich, die parallel zur Drehachse ist. Dadurch ist eine Anpassung an unterschiedliche Anschlussbedingungen möglich.

Um den Mikroschalter im Antriebsgehäuse sicher zu halten, ist er form- und/oder kraftschlüssig daran befestigt.

Nachfolgend werden Ausführungsbeispiele der Erfindung anhand der Zeichnung näher erläutert.

### Es zeigen:

- Fig. 1a: einen Außenrückblickspiegel mit einer ersten Ausführungsform eines Stellantriebs im Teilschnitt,
- Fig. 1b: den Stellantrieb aus Fig. 1a im Schnitt,
- Fig. 2: eine weitere Schnittansicht des Stellantriebs,
- Fig. 3: eine räumliche Darstellung eines Elektromotors mit einer Variante der Leitbleche,
- Fig. 4: eine räumliche Darstellung eines Mikroschalters mit Leitblechen,
- Fig. 5: eine Draufsicht auf eine zweite Ausführungsform des Stellantriebs,
- Fig. 6: eine Schnittansicht der zweiten Ausführungsform,
- Fig. 7: eine räumliche Darstellung der zweiten Ausführungsform und
- Fig. 8: eine Darstellung möglicher Positionen des Außenrückblickspiegels.

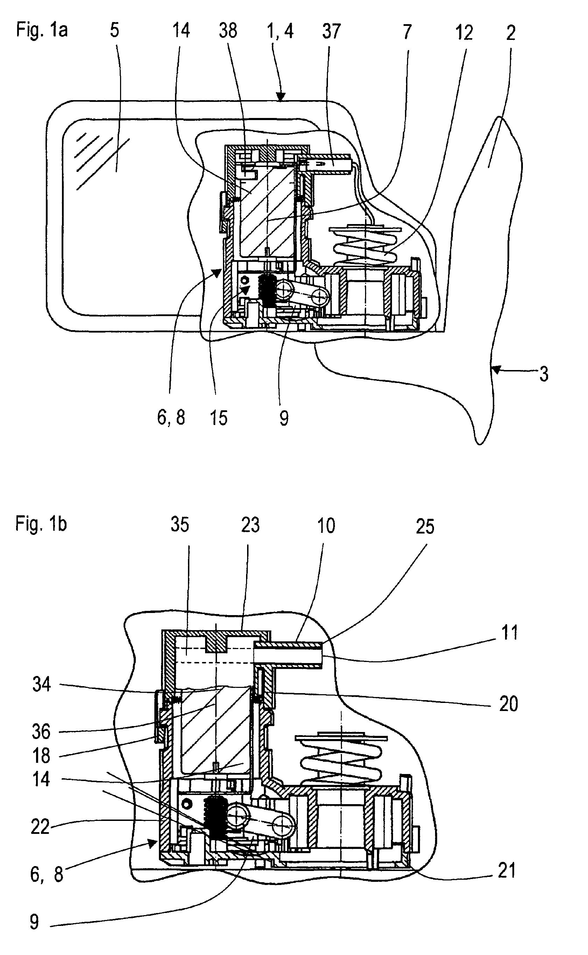

Fig. 1 a zeigt einen Außenrückblickspiegel 1, befestigt an einem Kraftfahrzeug 2 und eine erste Ausführungsform eines zwischen dem Kraftfahrzeug 2 und dem Außenrückblickspiegel 1 montierten und um eine Schwenkachse 7 schwenkbaren Stellantriebs 6 im Teilschnitt, wobei der Außenrückblickspiegel 1 zusammen mit dem Stellantrieb 6 eine als Spiegelkopf 4 bezeichnete Baugruppe bilden und ein fest mit dem Kraftfahrzeug 2 verbundenes Teil 3 als Spiegelfuß bezeichnet wird, eine Druckfeder 12, über die der Spiegelkopf 4 mit dem Spiegelfuß 3 druckbeaufschlagt verbunden ist und in einem Antriebsgehäuse 8 angeordnet: einen Elektromotor 14, der ein Untersetzungsgetriebe 15 antreibt und über Versorgungsanschlüsse 38 mit einem Stecker 37 elektrisch verbunden ist und einen Mikroschalter 9, von dem eine durch äußere Kraftanwendung verursachte Fehlstellung angezeigt werden kann.

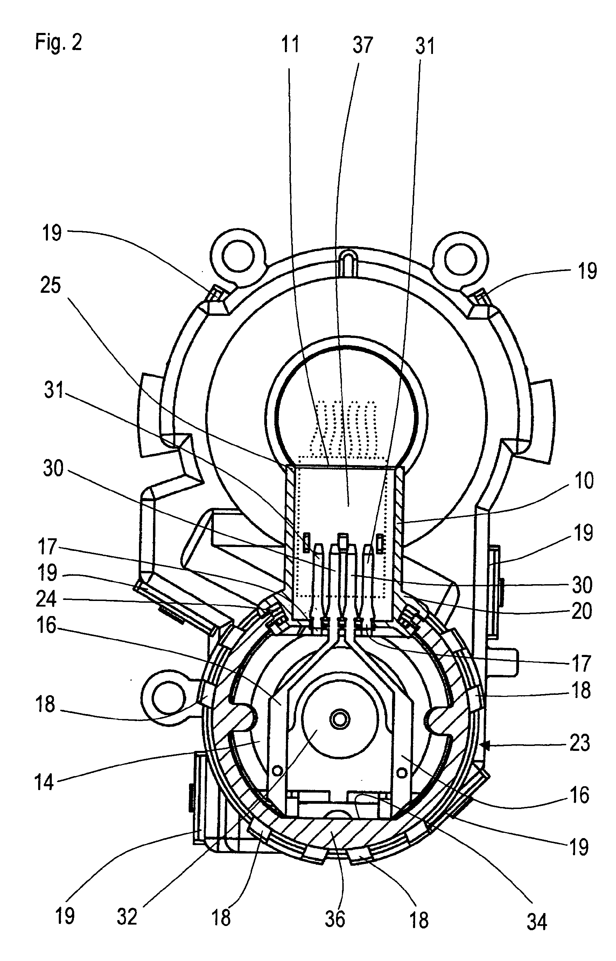

Fig. 1b zeigt eine etwas vergrößerte Darstellung der Schnittansicht aus Fig. 1a, mit dem Antriebsgehäuse 8, bestehend aus den Gehäuseteilen 20, 21, 22 und 23, wobei das Gehäuseteil 20 mit einem Steckerschacht 10 einstückig ist und über eine Schiebeverbindung mit dem Gehäuseteil 23 verbunden ist, welches über Schnappmittel 18 mit dem Gehäuseteil 22 und dieses über Schnappmittel 19 (Fig. 2) mit dem Gehäuseteil 21 verbunden ist.

Fig. 2 zeigt eine weitere Schnittansicht des Stellantriebs 6 rechtwinklig zur Schnittansicht aus den Fig. 1a und 1b, mit dem ersten Gehäuseteil 20, dem Steckerschacht 10, dem angedeuteten Stecker 37, dem vierten Gehäuseteil 23, das über die Schiebeverbindung 24 mit dem ersten Gehäusteil 20 verbunden ist, wobei die Schiebeverbindung so ausgeführt ist, dass eine Demontage nur über die Öffnung der Schnappmittel 18 möglich wäre, den Elektromotor 14, dessen Versorgungsanschlüsse 38 über Leitbleche 16 zu dem auf der anderen Seite des Elektromotors 14 angeordneten Steckerschacht 10 geführt werden, Leitblechen 17, deren Enden 31 zusammen mit den Enden 30 der Leitbleche 16 und dem Steckerschacht 10 als Stecker ausgebildet sind, die Schnappmittel 19, über die das zweite Gehäuseteil (21)mit dem dritten Gehäuseteil 22 verbunden ist und den Ansatz 32 des Elektromotors 14, der in einer Gehäuseausnehmung axialbeweglich gelagert ist.

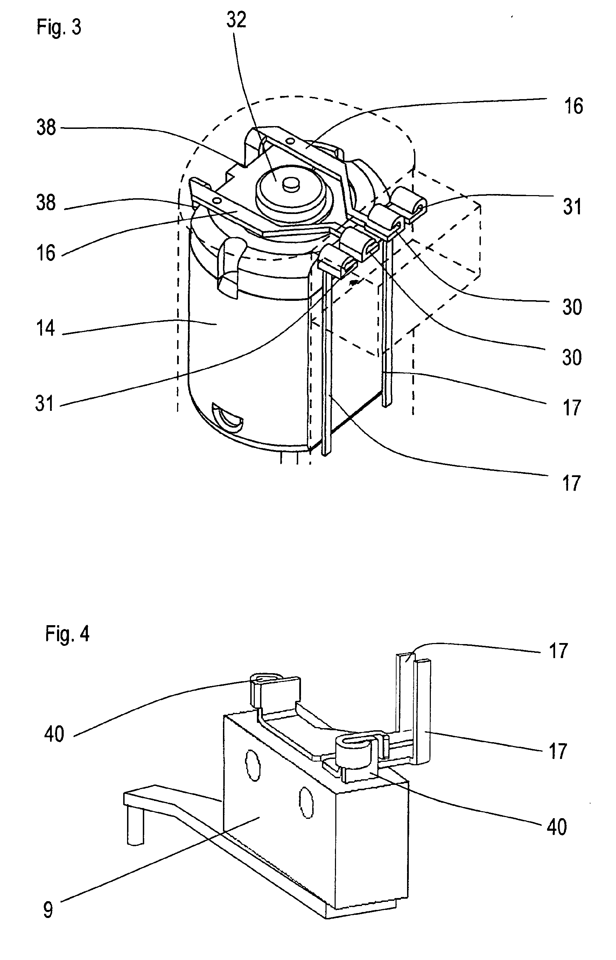

Fig. 3 zeigt eine räumliche Darstellung des Elektromotors 14, dessen Versorgungsanschlüsse 38 über die Leitbleche 16, mit den als weibliche Steckaufnahmen ausgebildeten Enden 30 verbunden sind, und Leitblechen 17, dessen ebenfalls als weibliche Steckaufnahmen ausgebildete Enden 31 in einer Reihe mit den Enden 30 stehen und so als Steckaufnahmen für einen einzigen Stecker dienen.

Das andere Ende der Leitbleche 17 ist wie aus Fig. 4 hervorgeht mit den Anschlüssen 40 des Mikroschalters 9 über Klemmverbindungen elektrisch verbunden.

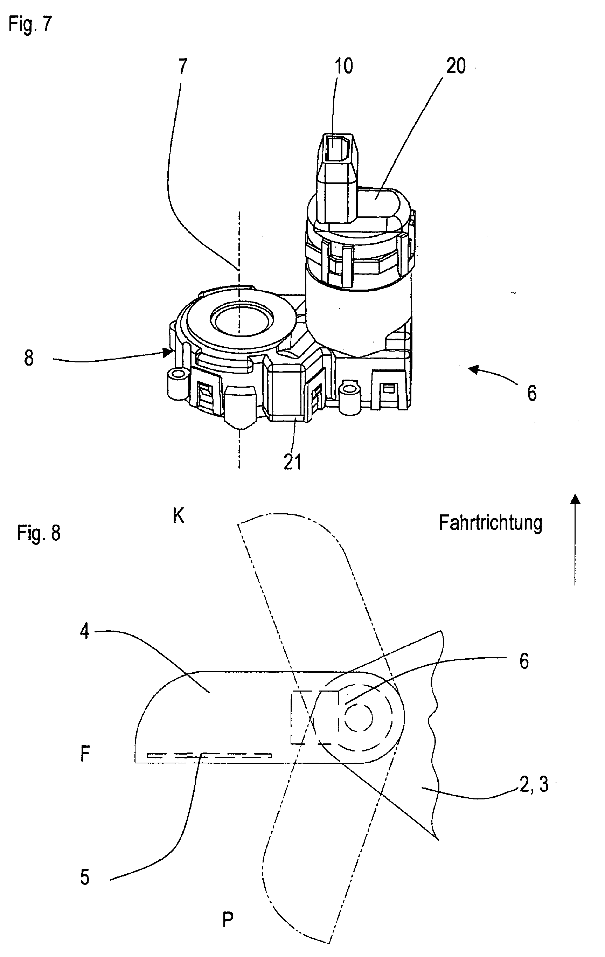

Ein zweites Ausführungsbeispiel des Stellantriebs ist in den Fig. 5 bis 7 dargestellt. Diese zeigen ein Antriebsgehäuse 8 mit nur drei Gehäuseteilen 20, 21 und 22, wobei das erste Gehäuseteil 20 einstückig mit einem Steckerschacht 10 ist, dessen Steckrichtung parallel zu einer Motorachsrichtung und parallel zu einer Schwenkachse ist. Fig. 5 ist eine Draufsicht, Fig. 6 eine Schnittansicht und Fig. 7 eine räumliche Darstellung des zweiten Ausführungsbeispiels des Stellantriebs mit dem Steckerschacht 10, dem ersten Gehäuseteil 20, dem zweiten Gehäuseteil 21, dem dritten Gehäuseteil 22, Schnappmitteln 18 zwischen dem ersten und dem dritten Gehäuseteil 20, 22 und Schnappmitteln 19 zwischen dem zweiten und dem dritten Gehäuseteil 21, 22, einem Elektromotor 14, dessen Versorgungsanschlüsse 28 über Leitbleche zu dem Steckerschacht 10 geführt werden, wobei Enden 30 und 31 von Leitblechen Steckeranschlüsse bilden.

Fig. 8 zeigt den Spiegelkopf 4 mit einem Spiegelglas 5 und seine mögliche Stellungen K, P und F, wobei K die nach vorne in Fahrtrichtung abgeklappte Stellung des Rückblickspiegels darstellt, die nur durch eine von außen auf den Spiegelkopf 4 ausgeübte Kraft erreichbar ist, P die nach hinten gegen Fahrtrichtung abgeklappte Parkstellung bedeutet und F die normale Fahrposition anzeigt.

### Bezugszeichenliste

- 1: Außenrückblickspiegel
- 2: Kraftfahrzeug
- 3: Spiegelfuß
- 4: Spiegelkopf
- 5: Spiegelglas
- 6: Stellantrieb
- 7: Schwenkachse
- 8: Antriebsgehäuse
- 9: Mikroschalter
- 10: Steckerschacht
- 11: Öffnungsquerschnitt
- 12: Druckfeder
- 13: Rastmittel
- 14: Elektromtor
- 15: Untersetzungsgetriebe
- 16: erste Leitbleche
- 17: zweite Leitbleche
- 18: Schnappmittel
- 19: Schnappmittel
- 20: erstes Gehäuseteil
- 21: zweites Gehäuseteil
- 22: drittes Gehäuseteil
- 23: viertes Gehäuseteil
- 24: Schiebeverbindung
- 25: Steckerschachtende
- 30: Steckerzunge/Ende der ersten Leitbleche
- 31: Steckerzunge/Ende der zweiten Leitbleche
- 32: Motoransatz
- 34: Projektion
- 35: Raumbereich
- 36: Antriebsgehäusewand
- 37: Stecker
- 38: Versorgungsanschlüsse (Elektromotor)
- 40: Anschlüsse

## Patentansprüche

1. Stellantrieb (6) für einen Kfz-Außenrückblickspiegel (1), mit einem am Kraftfahrzeug (2) zu befestigenden Spiegelfuß (3), einem ein Spiegelglas (5) tragenden, um eine Schwenkachse (7) schwenkbaren Spiegelkopf (4), der durch den in einem mehrteiligen Antriebsgehäuse (8) angeordneten Stellantrieb (6) antreibbar ist, bestehend aus einem axial in Bezug auf das Antriebsgehäuse (8) geringfügig in Achsrichtung verschiebbaren sowie Versorgungsanschlüsse (38) aufweisenden Elektromotor (14), dessen Ausgangswelle getrieblich mit einem selbsthemmenden Untersetzungsgetriebe (15) in Eingriff ist, dessen Ausgangszahnrad (39) über ausrastbare Rastmittel (13) unter der Kraftwirkung einer Druckfeder (12) mit dem Spiegelfuß (3) in Eingriff gehalten ist, wobei der Spiegelkopf (4) unter Einwirkung einer äußeren Kraft aus einer Gebrauchslage (F bis P) um die Schwenkachse (7) an das Kraftfahrzeug (2) anklappbar ist, wobei der Spiegelkopf (4) durch die ausrastbaren Rastmittel (13) mitnehmbar ist und dabei gegenüber dem Spiegelfuß (3) entlang der Schwenkachse (7) eine Relatiwerschiebung ausführen kann, die durch einen im Antriebsgehäuse (8) angeordneten und mit dem Spiegelfuß (3) in Berührung stehenden Mikroschalter (9) erkennbar ist, dadurch gekennzeichnet, dass mit einem ersten Gehäuseteil (20) ein Steckerschacht (10) einstückig ist und dass Enden (30) von Leitblechen (16), die mit den Versorgungsanschlüssen (38) des Elektormotors (14) verbunden sind und Enden (31) von Leitblechen (17), die mit Anschlüssen (40) des Mikroschalters (9) elektrisch verbunden sind in einem zwischen dem inneren Öffnungsquerschnitt (11) des äußeren Steckerschachtendes (25) und der Projektion (34) des Öffnungsquerschnittes (11) auf die gegenüberliegende Antriebsgehäusewand (36) beschriebenen Raumbereich (35) angeordnet und durch einen einzigen Stecker (37) kontaktierbar sind.

2. Stellantrieb nach Anspruch 1, dadurch gekennzeichnet, dass der Stecker (37) zumindest 4-polig ist.

3. Stellantrieb nach Anspruch 1 oder 2, dadurch gekennzeichnet, dass die Enden (30, 31) der Leitbleche (16, 17) als männliche Steckanschlüsse dienen und in den Steckerschacht (10) ragen, in welchem sie form- oder kraftschlüssig gehalten sind.

4. Stellantrieb nach Anspruch 1. 2 oder 3, dadurch gekennzeichnet, dass die Leitbleche (16), die mit dem Elektromotor (14) elektrisch verbunden sind, L- bis U-förmig ausgebildet sind.

5. Stellantrieb nach Anspruch 4, dadurch gekennzeichnet, dass die L- bis U-förmig ausgebildeten Leitbleche (16), die mit dem Elektromotor (14) elektrisch verbunden sind auf der, dem Steckerschacht (10) abgewandten Seite des Elektromotors (14), mit den Versorgungsanschlüssen (38) elektrisch kontaktiert sind und auf der dem Steckerschacht (10) zugewandten Seite des Elektromotors (4) mit dem Stecker (37) elektrisch kontaktierbar sind.

6. Stellantrieb nach Anspruch 1, 2, 3, 4 oder 5, dadurch gekennzeichnet, dass der Stecker (37) einzig mit weiblichen Steckaufnahmen versehen ist.

7. Stellantrieb nach Anspruch 1, 2, 4 oder 5, dadurch gekennzeichnet, dass die Enden (30) der Leitbleche (16) und die Enden (31) der Leitbleche (17) als weibliche Steckaufnahmen ausgebildet sind.

8. Stellantrieb nach Anspruch 1, 2, 4, 5 oder 7 dadurch gekennzeichnet, dass der Stecker (37) einzig mit männlichen Steckaufnahmen versehen ist.

9. Stellantrieb nach Anspruch 1, 2, 3, 4, 5, 6, 7 oder 8 dadurch gekennzeichnet, dass die Versorgungsanschlüsse (38) des Elektromotors (14) als weibliche Steckaufnahmen ausgebildet sind.

10. Stellantrieb nach zumindest einem der vorhergehenden Ansprüche, dadurch gekennzeichnet, daß der Mikroschalter (9) betätigt wird, sobald der Kfz-Rückblickspiegel (1) von einer äußeren Kraft F abgeklappt wird.

11. Stellantrieb nach zumindest einem der vorhergehenden Ansprüche, dadurch gekennzeichnet, dass die Leitbleche (17) zwischen dem Mikroschalter (9) und dem Steckerschacht (10) im Antriebsgehäuse (8) form- und/oder kraftschlüssig gehalten sind.

12. Stellantrieb nach Anspruch 11, dadurch gekennzeichnet, dass die Leitbleche (17) zwischen dem Mikroschalter (9) und dem Steckerschacht (10) im Antriebsgehäuse (8) durch Nieten, Heißverpressen, Verstemmen oder dgl. befestigt sind.

13. Stellantrieb nach zumindest einem der vorhergehenden Ansprüche, dadurch gekennzeichnet, dass der Elektromotor (14) im Antriebsgehäuse (8) radial im wesentlichen unbeweglich und axial beweglich gelagert ist, wobei ein Ende der Motorwelle und ein gegenüberliegender Motoransatz (32) je in einer Aufnahme des Antriebsgehäuses (8) gelagert ist.

14. Außenrückblickspiegel nach zumindest einem der vorhergehenden Ansprüche dadurch gekennzeichnet, dass das Antriebsgehäuse (8) aus vier Gehäuseteilen (20, 21, 22, 23) besteht, wobei das erste Gehäuseteil (20) mit dem Steckerschacht (10) einstückig ist, das zweite Gehäuseteil (21) am dritten Gehäuseteil (22) über Schnappmittel (19) gehalten ist und ein viertes Gehäuseteil (23) über eine Schiebeverbindung (24) mit dem ersten Gehäuseteil (20) verbunden und am dritten Gehäuseteil (22) über Schnappmittel (18) gehalten ist.

15. Außenrückblickspiegel nach zumindest einem der vorhergehenden Ansprüche, dadurch gekennzeichnet, dass die Verbindungen zwischen den Leitblechen (16, 17) und dem Elektromotor (14) bzw. dem Mikroschalter (9) Klemmverbindungen sind.

16. Außenrückblickspiegel nach zumindest einem der vorhergehenden Ansprüche, dadurch gekennzeichnet, dass die Steckrichtung des Steckerschachts (10) rechtwinklig zur Drehachse des Elektromotors (14) verläuft.

17. Außenrückblickspiegel nach zumindest einem der vorhergehenden Ansprüche, dadurch gekennzeichnet, dass die Steckrichtung des Steckerschachts (10) parallel zur Drehachse des Elektromotors (14) verläuft.

18. Außenrückblickspiegel nach zumindest einem der vorhergehenden Ansprüche, dadurch gekennzeichnet, dass die Drehachse des Elektromotors (14) parallel zur Schwenkachse (7) des Außenrückblickspiegels (2) des Elektromotors (14) verläuft.

19. Außenrückblickspiegel nach zumindest einem der vorhergehenden Ansprüche, dadurch gekennzeichnet, dass der Mikroschalter (9) form- und/oder kraftschlüssig im Antriebsgehäuse (8) gehalten ist.

20. Außenrückblickspiegel nach zumindest einem der vorhergehenden Ansprüche, **dadurch gekennzeichnet,** dass der Stecker (37) im Steckerschacht (10) geringfügig axial bewegbar ist.

21. Außenrückblickspiegel nach Anspruch 20, **dadurch gekennzeichnet,** dass die Enden (30, 31) der Leitbleche (16, 17) durch Ausnehmungen in einer im Steckerschacht angeordneten Wandung geführt sind, wobei sie so dimensioniert sind, dass sie in den Ausnehmungen zumindest axial bewegbar sind.

22. Außenrückblickspiegel nach Anspruch 20 und 21, **dadurch gekennzeichnet,** dass die Baugruppe aus Elektromotor (14), Leitblechen (16, 17) und Stecker (37) geringfügig axial bewegbar ist.
